(19) Europäisches Patentamt
European Patent Office
Office européen des brevets

(11) Veröffentlichungsnummer: **0 281 928 B1**

(12) **EUROPÄISCHE PATENTSCHRIFT**

(45) Veröffentlichungstag der Patentschrift: **17.08.94**

(51) Int. Cl.[5]: **C08F 220/38**, C08F 218/00, C08F 216/14, G03C 1/32

(21) Anmeldenummer: **88103222.1**

(22) Anmeldetag: **03.03.88**

Die Akte enthält technische Angaben, die nach dem Eingang der Anmeldung eingereicht wurden und die nicht in dieser Patentschrift enthalten sind.

# (54) Fluorhaltige Perlpolymerisate.

(30) Priorität: **12.03.87 DE 3708032**

(43) Veröffentlichungstag der Anmeldung:
**14.09.88 Patentblatt 88/37**

(45) Bekanntmachung des Hinweises auf die Patenterteilung:
**17.08.94 Patentblatt 94/33**

(84) Benannte Vertragsstaaten:
**BE DE FR GB IT**

(56) Entgegenhaltungen:
**EP-A- 0 182 516**
**NL-A- 6 510 472**

(73) Patentinhaber: **Agfa-Gevaert AG**
**Kaiser-Wilhelm-Allee**
**D-51373 Leverkusen (DE)**

(72) Erfinder: **Podszun, Wolfgang, Dr.**
**Wolfskaul 4**
**D-5000 Koeln 80 (DE)**
Erfinder: **Süling, Carlhans, Dr.**
**Carl-Leverkus-Strasse 10**
**D-5068 Odenthal (DE)**
Erfinder: **De Winter, Walter, Dr.**
**Parklaan 11**
**B-2232 's-Gravenwezel (BE)**
Erfinder: **Timmermann, Daniel**
**Theofil Reynlaan 68**
**B-2510 Mortsel (BE)**

**EP 0 281 928 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft fluorhaltige Perlpolymerisate mit einem mittleren Teilchendurchmesser (Massenmittel) von 1 bis 7 µm und einer engen Teilchendurchmesserverteilung sowie ein Verfahren zu ihrer Herstellung.

Feinteilige Perlpolymerisate mit enger Teilchendurchmesserverteilung auf Basis ausgewählter Monomerer und Monomerkombinationen, beispielsweise auf Basis von Styrol oder Acrylsäureestern sind bereits bekannt. So können z.B. monodisperse Teilchen nach einem aufwendigen, von J. Ugelstad et. al. vorgeschlagenen 2-Stufenverfahren synthetisiert werden [Makrom. Chem. 180, 737 (1979) und Adv. Coll. Interf. Sci 13, 101 (1980)].

Perlförmige Polymerisatteilchen mit relativ enger Teilchendurchmesserverteilung sind auch durch Suspensionscopolymerisaten von Maleinsäureanhydrid und α-Olefinen zugänglich (DE-A-2 501 123, DE-A-2 919 822 und DE-A-3 144 793).

Perlförmige Pfropfpolymerisate aus Methacrylsäure/Methylmethacrylat (Pfropfäste) und Maleinsäure/α-Olefine (Pfropfgrundlage) sind aus der DE-A-3 331 542 bekannt.

Die EP-A-80 225 beschreibt eine Methode zur Hertstellung stabiler wäßriger Dispersionen, nach der beispielsweise Styrol- oder Methylmethacrylat-Perlpolymerisate mit enger Teilchendurchmesserverteilung zugänglich sind.

EP-A-182 516 beschreibt die wäßrige Emulsion eines Acrylsäurecopolymeren, wobei die Polymerisat-Partikel durch Emulsionspolymerisation hergestellt werden und eine sehr gute Dispersions-Stabilität in wäßrigen Medien aufweisen.

Perlpolymerisate mit einem mittleren Teilchendurchmesser von 1-5 µm und enger Teilchendurchmesserverteilung werden unter anderem in fotografischen Aufzeichnungsmaterialien eingesetzt. Sie dienen z.B. als Mattierungsmittel oder Abstandshalter. Ihre Funktion besteht darin, Verklebungen zwischen verschiedenen Teilen des Aufzeichnungsmaterials oder anderen Materialien, die mit dem Aufzeichnungsmaterial in Kontakt kommen, zu verhindern. Diese Funktion wird von den bekannten Perlpolymerisaten auch weitgehend erfüllt.

Nachteilig ist jedoch, daß Aufzeichnungsmaterialien, die Perlpolymerisate nach dem Stand der Technik enthalten, leichter oberflächlich beschädigt werden und schwieriger in Geräten, beispielsweise in einer Kamera oder einem Projektor transportiert werden. Diese Nachteile lassen sich auf die verringerte Gleitfähigkeit des fotografischen Aufzeichnungsmaterials zurückführen.

Aufgabe der vorliegenden Erfindung ist es, Perlpolymerisate bereitzustellen, die in fotografischen Aufzeichnungsmaterialien als Mattierungsmittel oder Abstandshalter eingesetzt werden können und dabei Materialien mit verbesserter Gleitfähigkeit liefern.

Diese Aufgabe wird durch Perlpolymerisate mit einem mittleren Teilchendurchmesser von 1 bis 7 µm und enger Teilchendurchmesserverteilung mit $K \leqq 0{,}25$ gelöst, die dadurch gekennzeichnet sind, daß sie 1-60 Gew.-% chemisch gebundenes Fluor enthalten.

Vorzugweise enthalten sie 10 bis 40 Gew.-% gebundenes Fluor.

K ist gleich der zweite Kumulant durch das Quadrat des ersten Kumulanten aus der Kumulantenanalyse der Autokorrelationsfunktion des gestreuten Laserlichtes (Koppel, D.E., J Chem. Phys. 57, 11 (1972) 4814-4820) und ist ein Maß für die Verteilungsbreite der Teilchendurchmesserverteilung. Je kleiner K ist, umso enger ist die Teilchendurchmesserverteilung.

Ein weiterer Gegenstand der Erfindung ist ein Verfahren zur Herstellung der genannten fluorhaltigen Perlpolymerisate, das dadurch gekennzeichnet ist, daß man fluorhaltige α,β-ungesättigte Verbindungen, gegebenenfalls im Gemisch mit fluorfreien α,β-ungesättigten Verbindungen in einem nichtwäßrigen, polaren Medium in Anwesenheit eines hochmolekularen Dispergators und eines niedermolekularen Tensids unter Verwendung eines Radikalbildners als Initiator polymerisiert.

Die erfindungsgemäßen Perlpolymerisate enthalten 1-60 Gew.-% chemisch gebundenes Fluor, das vorzugsweise in Form längerkettiger Perfluoralkylgruppen vorliegt. Besonders geeignet sind Perfluoralkylgruppen $-C_nF_{2n+1}$ mit n = 4 bis 20, vorzugsweise n = 7 bis 12. Die Perfluoralkylgruppen sind Bestandteile von Monomereinheiten, die sich vorzugsweise von α,β-ungesättigten Verbindungen der Formel I

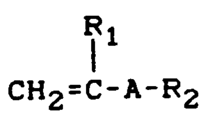

I

ableiten, worin

$R_1$ H, $CH_3$

A -O-,

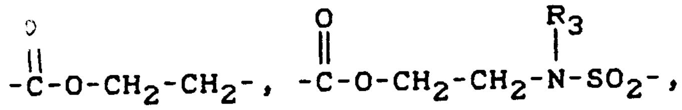

$R_2$ $-C_n F_{2n+1}$,

$R_3$ H, $C_1$-$C_6$-Alkyl und

n 4 bis 20, vorzugsweise 7 bis 12 bedeuten.

Diese Monomereinheiten machen bevorzugt 2 bis 75 Gew.-% des Polymers aus.

Erfindungsgemäß besonders bevorzgute Perlpolymerisate enthalten polymerisierte Monomereinheiten der Formel II

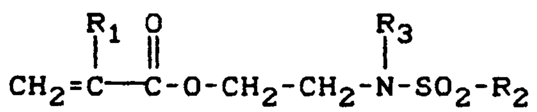

II

wobei

die Reste $R_1$, $R_2$ und $R_3$ die oben genannte Bedeutung haben.

Perfluoralkylgruppen enthaltende $\alpha,\beta$-ungesättigte Verbindungen sind bekannt. Die Synthese von Acrylat- und Methacrylatderivaten wird beispielsweise in der FR-PS 2 034 142 beschrieben.

Neben den genannten fluorhaltigen Monomereinheiten können die erfindungsgemäßen Perlpolymerisate Bausteine enthalten, die sich von fluorfreien $\alpha,\beta$-ungesättigten Verbindungen herleiten.

Beispiele sind Styrol, $\alpha$-Methylstyrol, Vinyltoluol, substituierte Vinyltoluole wie Vinylbenzylchorid, (Meth)-acrylsäureester wie Methylmethacrylate, Butylmethacrylat, Butylacrylat und Hydroxyethylmethacrylat, Butadien, Isobutylen, 2-Chlorbutadien, 2-Methylbutadien, Acrylnitril und Vinylpyridin. Bevorzugt sind Styrol und Methacrylsäureester, besonders bevorzugt ist Methylmethacrylat.

Die erfindungsgemäßen Perlpolymerisate können einen geringen Anteil, z.B. 0,01 bis 2,5 Gew.-% einpolymerisierte bifunktionelle Monomere als Vernetzer enthalten, beispielsweise Ethylendimethacrylat oder Divinylbenzol.

Der mittlere Teilchendurchmesser der erfindungsgemäßen Perlpolymerisate beträgt 1 bis 7 $\mu$m. Die Teilchendurchmesserverteilung ist eng, vorzugsweise monodispers.

Zur Herstellung der erfindungsgemäßen Perlpolymerisate werden die obengenannten fluorhaltigen $\alpha,\beta$-ungesättigten Verbindungen, gegebenenfalls im Gemisch mit fluorfreien $\alpha,\beta$-ungesättigten Verbindungen, in einem polaren Medium in Anwesenheit eines hochmolekularen Dispergators und eines niedermolekularen Tensids polymerisiert.

Das polare Medium besteht überwiegend aus nichtwäßrigen Lösungsmitteln, wie Dioxan, Aceton, Acetonitril, Dimethylformamid und Alkoholen. Bevorzugt sind niedere Alkohole, insbesondere Methanol, Ethanol, n-Propanol, iso-Propanol, n-Butanol, iso-Butanol und tert.-Butanol. Gut geeignet sind auch Mischungen aus verschiedenen Lösungsmitteln, insbesondere aus verschiedenen Alkoholen.

Bei Verwendung von Lösungsmittelgemischen können auch unpolare Lösungsmittel, insbesondere Kohlenwasserstoffe, wie Hexan und Heptan in Anteilen bis zu 50 Gew.-% mitverwendet werden.

Als hochmolekulare Dispergatoren sind im verwendeten polaren Medium lösliche natürliche und synthetische makromolekulare Verbindungen mit einem $M_W$ (Gelpermeationschromatographie) von $5 \cdot 10^3$ bis $5 \cdot 10^5$, vorzugsweise $10^4$-$2 \cdot 10^5$ geeignet; Beispiele sind Cellulosederivate wie Methylcellulose, Ethylcellulose und Hydroxypropylcellulose sowie Polyvinylacetat. Besonders geeignet sind teilverseifte Polyvinylacetate mit einem Verseifungsgrad von vorzugsweise 5-25 %. Ebenfalls gut geeignet sind Polyvinylpyrrolidon, substituierte Polyvinylpyrrolidone und Polyvinylcaprolactam, sowie Copolymerisate aus Vinylpyrolidon und Vinylcaprolactam. Es werden vorzugsweise 1-10 Gew.-%, bezogen auf das polare Medium, eingesetzt.

Als niedermolekulare Tenside können sowohl ionische als auch nichtionische Tenside eingesetzt werden. Gut geeignet sind vor allem ionische Tenside. Als anionische Tenside eignen sich Natriumsalze

von Sulfonbernsteinsäureestern, als kationische Tenside N-Alkylammoniumsalze, z.B. Methyltricaprylylammoniumchlorid. Das Molekulargewicht geeigneter Tenside liegt unter 1000. Vorzugsweise werden 0,2-5 Gew.-%, insbesondere 0,5-2 Gew.-% bezogen auf das polare Medium, eingesetzt.

Die Initierung der Polymerisation erfolgt mit üblichen Radikalbildnern, insbesondere Peroxyverbindungen und Azoverbindungen. Gut geeignet ist z.B. Azodiisobuttersäurenitril.

Die Polymerisationstemperatur richtet sich nach der Zerfallstemperatur des Initiators sowie der Siedetemperatur des Lösungsmittels und liegt vorzugsweise im Bereich von 50-140 °C. Es ist vorteilhaft, bei der Siedetemperatur des Lösungsmittels zu polymerisieren. Die Polymerisationszeit beträgt im allgemeinen einige Stunden (z.B. 2-12 h).

Durch die Wahl des Lösungsmittels läßt sich der Teilchendurchmesser des Perlpolymerisates steuern. So nimmt der Teilchendurchmesser in der Reihe n-Propanol, Ethanol, Methanol ab. Durch Abmischen von Lösungsmitteln mit unterschiedlichen Löslichkeitsparametern läßt sich der Teilchendurchmesser stufenlos einstellen.

Nach beendeter Polymerisation wird eine Polymerdispersion erhalten. Für viele Einsatzzwecke kann die Polymerdispersion ohne weitere Aufarbeitungsschritte angewendet werden.

Ist eine Isolierung des Perlpolymerisates erwünscht, so kann dies durch Zentrifugieren oder durch Ausfällen mit z.B. Wasser oder Kohlenwasserstoff, wie Hexan erfolgen.

Die erfindungsgmeäßen Perlpolymerisate eignen sich als Mattierungsmittel und Abstandshalter in fotografischen Aufzeichnungsmaterialien, beispielsweise in fotographischen Elementen auf Basis fotosensibler Silberhalogenid-Emulsionsschichten. Die erfindungsgemäß erhaltenen Aufzeichnungsmaterialien zeichnen sich durch hoher Oberflächenqualität und gute Gleitfähigkeit aus.

Beispiel 1

In je einem Reaktionskolben mit Rückflußkühler, Rührer und Thermometer wurden 14 g Polyvinylpyrrolidon, 4 g Methyltricaprylylammoniumchlorid und 0,25 g Azodiisobutyronitril in 400 ml Methanol gelöst. Zu der Lösung wurden jeweils 25 g Monomergemisch der folgenden Zusammensetzung gegeben:

| | a | b | c |
|---|---|---|---|
| N-Methyl-N-perfluoroctyl-sulfonamidoethylacrylat | 6,25 g | 8,3 g | 12,5 g |
| Methylmethacrylat | 18,75 g | 16,7 g | 12,5 g |

Das Gemisch wurde unter Rühren 5 h am Rückfluß erhitzt. Die erhaltenen Dispersionen wurden 15 Minuten bei 2500 UpM zentrifugiert. Der isolierte Feststoff wurde in Methanol gewaschen und bei 60 °C in Trockenschrank getrocknet.

| | a | b | c |
|---|---|---|---|
| Ausbeute [%] | 17,8, | 19,2 | 18,5 |
| mittlerer Teilchendurchmesser [µm] | 3,5 | 4,2 | 4,3 |
| Fluorgehalt [Gew.-%] | 15,6 | 22,0 | 27,7 |

Beispiel 2

Entsprechend der in Beispiel 1 angegebenen Arbeitsweise wurden jeweils 25 g Monomergemisch aus 6,25 g N-Methyl-N-perfluoroctylsulfonamidoethylmethacrylat und 18,75 g Methylmethacrylat in

a) 400 ml Methanol
b) 300 ml Methanol + 100 ml Ethanol

c) 400 ml Ethanol
polymerisiert.

Die Teilchendurchmesser wurden mittels Laser-Streulicht-Spektroskopie gemessen.

| | a | b | c |
|---|---|---|---|
| Teilchendurchmesser [µm] | 3,9 | 4,8 | 7,5 |
| K | 0,07 | 0,09 | 0,35 |

Die K-Werte der Versuche a und b entsprechen Werten, wie sie für monodisperse Dispersionen gefunden werden.

Beispiel 3

Entsprechend der Arbeitsweise des Beispiels 1 wurden 700 g Polyvinylpyrrolidon, 200 g Methyltricaprylammoniumchlorid und 12,5 g Azodiisobutyronitril in 20 l Lösungsmittel gelöst und in der erhaltenen Lösung ein Gemisch aus 937,5 g Methylmethacrylat und 312,5 g N-Methyl-N-perfluoroctylsulfonamidoethylmethacrylat innerhalb von 10 h bei 65 °C polymerisiert. Folgende Lösungsmittel kommen zur Anwendung:

| | a | b | c |
|---|---|---|---|
| Methanol [l] | 20 | 18 | 12 |
| Hexan [l] | - | 2 | 6 |

Die Teilchendurchmesser der erhaltenen Polymerisate wurden mittels Laser-Streulicht-Spektroskopie ermittelt.

| | a | b | c |
|---|---|---|---|
| Teilchendurchmesser [µm] | 4,0 | 3,4 | 2,8 |
| K | 0,09 | 0,08 | 0,08 |

Beispiel 4

Eine Silberbromidiodidröntgenemulsion (2 Mol-% Iodid), die pro kg 80 g Gelatine und das Silberhalogenid in einer Menge, die 190 g Silbernitrat entspricht, enthält, wurde auf beiden Seiten eines mit Haftschichten versehenen Cellulosetriacetatträgers aufgetragen. Mit einem kg Emulsion wurden so 27 $m^2$ beschichtet.

Auf beiden Seiten des Trägers wurde auf die noch nasse Emulsionsschicht eine Schutzschicht aus der folgenden Gießlösung aufgetragen:

| | |
|---|---|
| Gelatine | 30 g |
| 5 gew.-%ige wäßrige Lösung von Na-Diisooctyl-sulfosuccinat | 28 ml |
| Antistatisches Mittel | 2 g |
| 4 gew.-%ige wäßrige Formaldehydlösung | 30 ml |
| Mattierungsmittel | (s.u.) |
| Wasser | zu 1 000 ml |

Als antistatisches Mittel wurde eine 10 gew.-%ige wäßrige Lösung ethoxilierter Ricinolsäure mit 40 Gew.-% Ethylenoxidgruppen verwendet. Als Mattierungsmittel wurde das gemäß Beispiel 3 (Probe a) erhaltene Polymerisat eingesetzt.

Dieses Perlpolymerisat mit Durchschnittsteilendurchmesser von 4 µm wurden in Wasser dispergiert. Die erhaltene Dispersion wurde mittels einer Nylon-Gaze mit Maschenweite von 60 x 60 µm filtriert.

16 g der erhaltenen Perlpolymerisate wurden in eine wäßrige Lösung von 48,4 g Gelatine, die 7,5 ml einer 25 gew.-%igen ethanolischen Phenollösung enthielt, eingetragen, und das erhaltene Gemisch wurde mit Wasser auf ein Volumen von 500 ml verdünnt.

Nachfolgend wurden 30 g dieser Dispersion mit 1 l einer Gießlösung für die auf einen silberhalogenidhaltigen Röntgenfilm aufzutragende Schutzschicht versetzt. 1 l der Gießlösung wurde auf 34 $m^2$ vergossen. Nach der Trocknung wies die Schutzschicht 26 mg Perlpolymerisat/$m^2$ auf.

Zum Vergleich wurde ein Material hergestellt, das als Mattierungsmittel eine Dispersion von Polymethylmethacrylatteilchen in gleicher Menge enthielt. Die Dispersion wurde erhalten, indem eine Lösung des Polymerisates in Ethylacetat in Wasser eingetragen wurde.

Der statische und dynamische Reibungskoeffizient der Schutzschichten wurde im Vergleich zu rostfreiem Stahl ermittelt. Die Bestimmung wurde mit einer in Journal of Scientific Instruments, Volume 28, July 1951, Seite 220 beschriebenen Vorrichtung durchgeführt.

| Schutzschicht mit | Reibungskoeffizient | |
|---|---|---|
| | statisch | dynamisch |
| erfindungsgemäßen Perlpolymerisaten | 0,19 | 0,14 |
| Polymethylenmethacrylat-Perlen | 0,44 | 0,37 |

Das Röntgenmaterial mit den erfindungsgemäßen Perlpolymerisaten zeigt somit eine verbesserte Gleitfähigkeit.

## Patentansprüche

1. Perlpolymerisate mit einem mittleren Teilchendurchmesser von 1 bis 7 $\mu$m und enger Teilchendurchmesser-Verteilung mit einer Verteilungsbreite K ≦ 0.25, dadurch gekennzeichnet, daß sie 1 - 60 Gew.-% chemisch gebundenes Fluor enthalten.

2. Perlpolymerisate nach Anspruch 1, dadurch gekennzeichnet, daß sie 2-75 Gew.-% copolymerisierte Monomereinheiten der Formel I

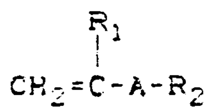

I

worin

A -O-,

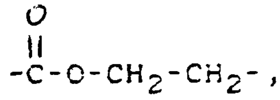

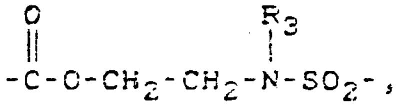

$R_1$ H, $CH_3$

$R_2$ $-C_n F_{2n+1}$,

$R_3$ H, $C_1$-$C_6$-Alkyl und

n 4 bis 20 bedeuten, und 25 - 98 Gew.-% copolymerisierte Monomereinheiten von fluorfreien $\alpha,\beta$-ungesättigten Verbindungen enthalten.

**3.** Perlpolymerisate nach Ansprüchen 1 oder 2, dadurch gekennzeichnet, daß sie 2 - 75 Gew.-% copolymerisierte Monomereinheiten der Formel II enthalten

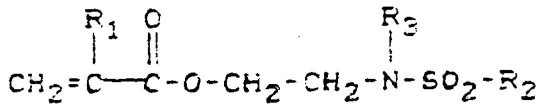

II

worin
$R_1$, $R_2$ und $R_3$ die in Anspruch 2 genannte Bedeutung besitzen.

**4.** Perlpolymerisate nach Anspruch 3, dadurch gekennzeichnet, daß sie 2-75 Gew.-% copolymerisierte Monomereinheiten der Formel II und 25-98 Gew.-% copolymerisiertes Methylmethacrylat enthalten.

**5.** Verfahren zur Herstellung von Perlpolymerisaten nach Anspruch 1, dadurch gekennzeichnet, daß man fluorhaltige $\alpha,\beta$-ungesättigte Verbindungen, gegebenenfalls im Gemisch mit fluorfreien $\alpha,\beta$-ungesättigten Verbindungen in einem nictwäßrigen, polaren Medium in Anwesenheit eines hochmolekularen Dispergators, eines niedermolekularen Tensids und eines Radikalbildners als Initiator polymerisiert.

**6.** Verwendung von Perlpolymerisaten nach Anspruch 1 in fotografischen Aufzeichnungsmaterialien.

## Claims

**1.** Bead polymers having an average particle diameter of 1 to 7 $\mu$m and a narrow particle diameter distribution with a distribution width K of $\leq 0.25$, characterized in that they contain 1 to 60% by weight of chemically bound fluorine.

**2.** Bead polymers as claimed in claim 1, characterized in that they contain 2 to 75% by weight of copolymerized monomer units corresponding to formula I:

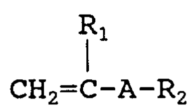

(I)

in which
A represents -O-,

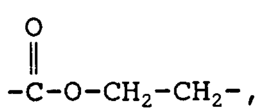, 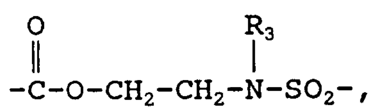,

$R_1$ represents H, $CH_3$
$R_2$ represents $-C_nF_{2n+1}$,
$R_3$ represents H, $C_{1-6}$ alkyl and
n = 4 to 20,
and 25 to 98% by weight of copolymerized monomer units of fluorine-free $\alpha,\beta$-unsaturated compounds.

3. Bead polymers as claimed in claim 1 or 2, characterized in that they contain 2 to 75% by weight of copolymerized monomer units corresponding to formula II:

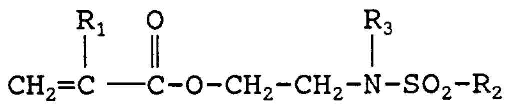

(II)

in which
$R_1$, $R_2$ and $R_3$ are as defined in claim 1.

4. Bead polymers as claimed in claim 3, characterized in that they contain 2 to 75% by weight of copolymerized monomer units corresponding to formula II and 25 to 98% by weight of copolymerized methyl methacrylate.

5. A process for the production of the bead polymers claimed in claim 1, characterized in that fluorine-containing $\alpha,\beta$-unsaturated compounds, optionally in admixture with fluorine-free $\alpha,\beta$-unsaturated compounds, are polymerized in a non-aqueous polar medium in the presence of a high molecular weight dispersant, a low molecular weight surfactant and a radical former as initiator.

6. The use of the bead polymers claimed in claim 1 in photographic recording materials.

## Revendications

1. Polymères en perles ayant un diamètre moyen de particules de 1 à 7 µm et une distribution étroite de diamètres des particules avec une largeur de distribution K inférieure ou égale à 0,25, caractérisés en ce qu'ils contiennent 1 à 60 % en poids de fluor lié chimiquement.

2. Polymères en perles suivant la revendication 1, caractérisés en ce qu'ils contiennent 2 à 75 % en poids de motifs monomères copolymérisés de formule I

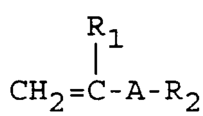

I

dans laquelle

A représente -O-,

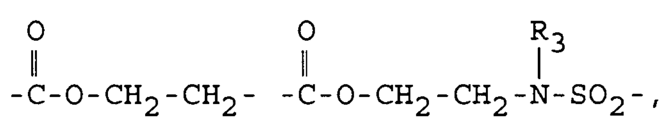

$R_1$ représente H, $CH_3$

$R_2$ est un groupe $-C_n F_{2n+1}$,

$R_3$ représente H, un groupe alkyle en $C_1$ à $C_6$ et

n a une valeur de 4 à 20, et 25 à 98 % en poids de motifs monomères copolymérisés de composés à non-saturation $\alpha,\beta$ ne contenant pas de fluor.

3. Polymères en perles suivant la revendication 1 ou 2, caractérisés en ce qu'ils contiennent 2 à 75 % en poids de motifs monomères copolymérisés de formule II :

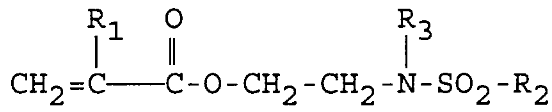

II

dans laquelle
$R_1$, $R_2$ et $R_3$ ont la définition indiquée dans la revendication 2.

**4.** Polymères en perles suivant la revendication 3, caractérisés en ce qu'ils contiennent 2 à 75 % en poids de motifs monomères copolymérisés de formule II et 25 à 98 % en poids de méthacrylate de méthyle copolymérisé.

**5.** Procédé de production de polymères en perles suivant la revendication 1, caractérisé en ce qu'on polymérise des composés à non-saturation $\alpha,\beta$ contenant du fluor, éventuellement en mélange avec des composés à non-saturation $\alpha,\beta$ ne contenant pas de fluor, dans un milieu polaire non aqueux en présence d'un dispersant de haut poids moléculaire, d'un agent tensio-actif de bas poids moléculaire et d'un générateur de radicaux comme initiateur.

**6.** Utilisation de polymères en perles suivant la revendication 1 dans des matériels d'enregistrement photographiques.